# EUROPEAN PATENT APPLICATION

(11) **EP 1 684 524 A1**
(43) Date of publication of application: **26.07.2006**
(21) Application number: 05257328.4
(22) Date of filing: 29.11.2005
(51) Int. Cl.: H04N 7/26, H04N 7/34, H04N 7/50

(54) **Method and apparatus for predicting frequency transform coefficients in video codec, video encoder and decoder having the apparatus and encoding and decoding method using the method**

(30) Priority: 19.01.2005 KR 2005005005
(71) Applicant: Samsung Electronics Co., Ltd., Suwon-si, Gyeonggi-Do (KR)
(72) Inventor: Kim, So-young, Yongin-si Gyeonggi-do (KR); Park, Jeong-hoon, Seoul (KR); Lee, Sang-rae, 249-806 Hwanggol Maeul 2-danji, Suwon-si Gyeonggi-do (KR); Park, Seung-ran, Hwaseong-si Gyeonggi-do (KR); Sohn, Yu-mi, 503-1005 Tapmaeul Ssangyong Apt., Seongnam-si Gyeonggi-do (KR)
(74) Representative: Brandon, Paul Laurence

(57) **Abstract**

Provided are a method and apparatus for predicting frequency transform coefficients in a video codec, a video encoder and decoder having the apparatus, and an encoding and decoding method using the method. The method of predicting the frequency transform coefficients in a frequency transform domain includes: calculating a cost between a DC coefficient of a current frequency transformed block that is to be predicted and DC coefficients of frequency transformed blocks adjacent in horizontal, vertical, and diagonal directions with respect to the current frequency transformed block; and selecting an adjacent block with the smallest calculated cost, and predicting DC and AC coefficients of the current frequency transformed block using coefficients of the selected adjacent block. Accordingly, compression efficiency can be improved, and video data can be effectively encoded reflecting the characteristics of various patterns by calculating prediction values of numerous patterns.

## Description

The present invention relates to methods and apparatus for predicting frequency transform coefficients video encoders and decoders using the apparatus, and encoding and decoding methods using the methods.

If video data of a single frame is transformed into a frequency domain, energy is centralized to signals with low-frequency components. Therefore, a frame is divided into macroblocks of a predetermined size and when 4 ×4 or 8 ×8 DCT is performed to respective macroblocks, compression efficiency can be greatly improved since data is centralized to low-frequency components. A discrete cosine transform (DCT) is used as the frequency transform. DCT is used to reduce spatial repetition of pixels, and is commonly used because it has better efficiency than other transforms with respect to energy density. DCT that is used to encode video data includes 4×4 DCT and 8×8 DCT. The video data that is 4×4 or 8 ×8 DCT transformed is decoded by an inverse DCT (IDCT).

When DCT transform is performed as described above, DCT coefficients of a 4×4 block or an 8 ×8 block are obtained. A DCT coefficient at the top left corner among the DCT coefficients of a 4 ×4 block or an 8 ×8 block is a DC coefficient with a low-frequency component, and the rest of the DCT coefficients are AC coefficients. In order to reduce the amount of data in the encoding process of the video data, the DC and AC coefficients obtained by DCT are predicted using DC coefficients and AC coefficients of adjacent blocks to obtain predicted DC and AC coefficients. An adjacent block that is to be used in the prediction is selected considering the DC and AC coefficients of the adjacent blocks, and only the difference between the coefficient of the selected block and the coefficient of the current block is entropy encoded. Here, the prediction of the DC coefficient is performed first, and then accordingly, the AC coefficients of the current block are predicted using the AC coefficients of the adjacent block.

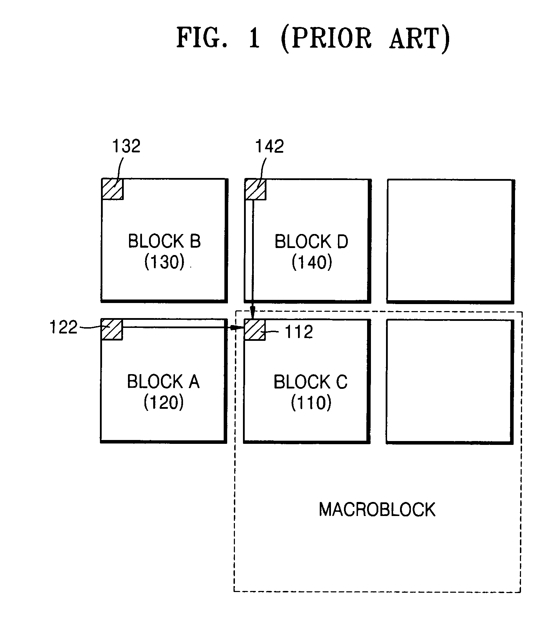

FIG. 1 is a reference diagram for illustrating a conventional method of predicting a DC coefficient.

The size of a single macroblock, which configures a video frame, is usually 16×16, and 4×4 DCT or an 8 ×8 DCT is performed on the macroblock. For example, when performing 8 ×8 DCT on the macroblock, a DCT coefficient of a block C 110 is not entropy encoded. Instead, DCT coefficients of a block A 120, a block B 130, and a block D 140, which are adjacent to the block C 100 and are already encoded, are considered and a block with the most similar DCT coefficient with the coefficient of the block C 110 is selected. The difference between the coefficient of the selected block and the coefficient of the block C 100 is entropy encoded.

Referring to FIG. 1, first, a DC coefficient 112 is predicted to obtain a predicted DC coefficient. To do so, an adjacent block with the most similar DC coefficient to the DC coefficient 112 of the block C 100 is searched. Here, an adjacent block is either a block A 120, which is adjacent to the block C 110 in the horizontal direction, or a block D 140, which is adjacent to the block C 110 in the vertical direction. Therefore, the difference between a DC coefficient 122 of the block A 120 and a DC coefficient 132 of the block B 130, and the difference between a DC coefficient 142 of the block D 140 and the DC coefficient 132 of the block B 130 are calculated, and the adjacent block with a greater difference is used as a prediction block.

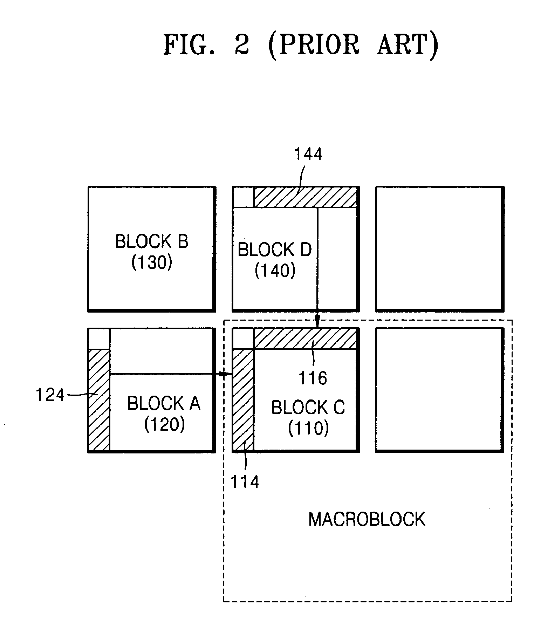

FIG. 2 is a reference diagram for illustrating a conventional method of predicting AC coefficients.

When the adjacent block used for predicting the DC coefficient is decided as described above with reference to FIG. 1, the adjacent block is also used to predict AC coefficients. That is, if the block A 120 is selected through the method of predicting the DC coefficient, AC coefficients of the block C 110 are predicted in the vertical direction using AC coefficients of the block A 120. In other words, a column 114 of the AC coefficients of the block C 110 is predicted using a column 124 of the AC coefficients of the block A 120. If the block D 140 is selected through the method of predicting the DC coefficient, AC coefficients of the block C 110 are predicted in the horizontal direction using AC coefficients of the block D 140. In other words, a row 116 of the AC coefficients of the block C 110 is predicted using a row 144 of the AC coefficients of the block D 140.

However, encoding cannot be effectively performed by reflecting various patterns of videos because DC coefficients are horizontally and vertically predicted using only the top or left block with respect to the current block, and then AC coefficients are accordingly predicted. Also, an effective encoding cannot be performed when there is a difference in low frequency components and high frequency components of the video because the block decided by the DC coefficient prediction is also used to predict AC coefficients. Furthermore, the prediction that reflects the pattern characteristics of the video cannot be obtained because only AC coefficients at the same locations in the adjacent block and the current block are compared and then predicted.

Preferred embodiments of the present invention aim to provide a method and apparatus for predicting coefficients which predicts discrete cosine transform (DCT) coefficients of a current block using DCT coefficients of blocks adjacent to the current block in multi-directions when predicting DCT coefficients in a frequency transform domain, a video encoder and decoder having the apparatus, and an encoding and decoding method using the method.

Preferred embodiments of the present invention also aim to provide a method and apparatus for predicting coefficients which predicts DCT coefficients by varying patterns of DCT coefficients that are to be used for the prediction and reflecting various video patterns when predicting DCT coefficients in a frequency transform domain, a video encoder and decoder having the apparatus, and an encoding and decoding method using the method.

According to an aspect of the present invention, there is provided a method of predicting frequency transform coefficients in a frequency transform domain, comprising: calculating a cost between a DC coefficient of a current frequency transformed block that is to be predicted and DC coefficients of frequency transformed blocks adjacent in horizontal, vertical, and diagonal directions with respect to the current frequency transformed block; and selecting an adjacent block with the smallest calculated cost, and predicting DC and AC coefficients of the current frequency transformed block using coefficients of the selected adjacent block.

In the selecting of the adjacent block with the smallest calculated cost and predicting of the DC and AC coefficients of the current frequency transformed block, the coefficients of the current frequency transformed block may be predicted using both AC coefficients at a furthest left column and AC coefficients at a top row of the selected adjacent block.

The adjacent blocks may include blocks right next to the current frequency transformed block, and further include blocks right next to the blocks that are right next to the current frequency transformed block.

In the selecting of the adjacent block with the smallest calculated cost and predicting of the DC and AC coefficients of the current frequency transformed block, DC and AC coefficients of the current frequency transformed block may be predicted by selecting transform coefficients in the selected adjacent block according to a plurality of patterns created reflecting the characteristics of a video image. The plurality of patterns may include a pattern created by combining coefficients in a horizontal direction, a pattern created by combining coefficients in a vertical direction, a pattern created by combining coefficients in a rectangle, and a pattern created by combining coefficients in a diagonal direction.

According to another aspect of the present invention, there is provided an apparatus for predicting frequency transform coefficients in a frequency transform domain, comprising: a prediction direction determining unit which calculates a cost between a DC coefficient of a current frequency transformed block that is to be predicted and DC coefficients of frequency transformed blocks adjacent in horizontal, vertical, and diagonal directions with respect to the current frequency transformed block, and selects an adjacent block with the smallest calculated cost; and a prediction performing unit which predicts DC and AC coefficients of the current frequency transformed block using frequency transformed coefficients of the selected adjacent block.

According to another aspect of the present invention, there is provided a video encoder, including: a coefficient predicting unit that receives data in which a video frame that is to be encoded is transformed and quantized, calculates a cost between a DC coefficient of a current frequency transformed block that is to be predicted and DC coefficients of frequency transformed blocks adjacent in horizontal, vertical, and diagonal directions with respect to the current frequency transformed block, selects an adjacent block with the smallest calculated cost, and predicts DC and AC coefficients of the current frequency transformed block using coefficients of the selected adjacent block; and an entropy encoding unit that entropy encodes information regarding the selected adjacent block and the predicted transform coefficients.

According to another aspect of the present invention, there is provided a video decoder, including: an entropy decoding unit that decodes an encoded bit stream, and extracts frequency transformed coefficients and prediction mode information, which contains information on an adjacent block used in predicting the frequency transformed coefficients; and a coefficient restoring unit that selects an adjacent block according to the extracted information on the adjacent block, and restores coefficients of a block which is to be restored using coefficients of the adjacent block.

According to another aspect of the present invention, there is provided a method of decoding video data, comprising: entropy decoding an encoded bit stream, and extracting frequency transformed coefficients and prediction mode information, which contains information on an adjacent block used in predicting the frequency transformed coefficients; and selecting an adjacent block according to the extracted information on the adjacent block, and restoring coefficients of a block which is to be restored using coefficients of the adjacent block.

Further features of the present invention are set out in the appended claims.

The above and other features and advantages of the present invention will become more apparent by describing in detail exemplary embodiments thereof with reference to the attached drawings in which:
FIG. 1 is a reference diagram for illustrating a conventional method of predicting a DC coefficient;
FIG. 2 is a reference diagram for illustrating a conventional method of predicting AC coefficients;
FIG. 3 is a reference diagram for illustrating a method of predicting discrete cosine transform (DCT) coefficients according to an embodiment of the present invention;
FIG. 4 is a view illustrating a direction for predicting a frequency transform coefficient in an embodiment of the present invention;
FIG. 5 is a flow chart illustrating a method of predicting a frequency transform coefficient in an encoding process according to an embodiment of the present invention;
FIG. 6 is a flow chart illustrating a method of predicting a frequency transform coefficient in a decoding process according to an embodiment of the present invention;
FIG. 7 is a block diagram of a video encoder according to an embodiment of the present invention;
FIG. 8 is a block diagram of a video decoder according to an embodiment of the present invention;
FIG. 9 is a flow chart illustrating a method of encoding video data using DCT coefficient prediction according to another embodiment of the present invention;
FIG. 10 is a view of adjacent blocks that are used in the DCT coefficient prediction;
FIG. 11A is a view illustrating a pattern of coefficients used in a prediction when using a 4 ×4 DCT transform;
FIG. 11B is a view illustrating a pattern of coefficients used in a prediction when using an 8 ×8 DCT transform;
FIG. 12 is a flow chart illustrating a method of decoding video data using the DCT coefficient prediction according to an embodiment of the present invention; and
FIG. 13 is a block diagram of a coefficient predicting unit.

The present invention will now be described more fully with reference to the accompanying drawings, in which exemplary embodiments of the invention are shown.

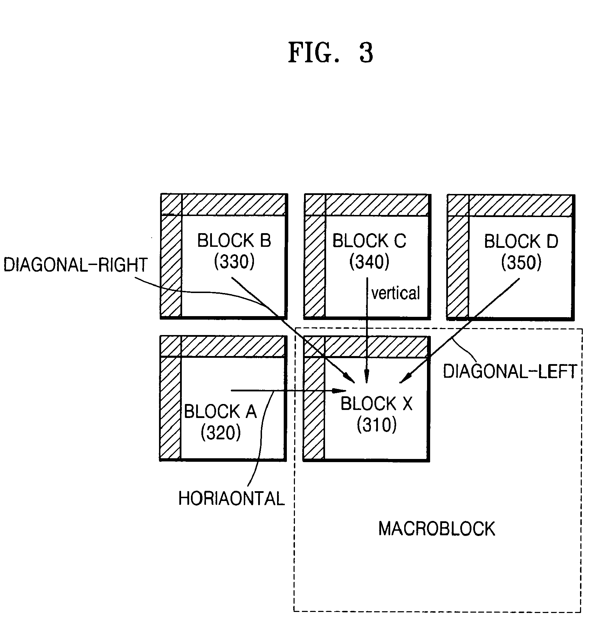

FIG. 3 is a reference diagram for illustrating a method of predicting discrete cosine transform (DCT) coefficients according to an embodiment of the present invention.

It can be seen that prediction directions are not only in horizontal and vertical directions but also in diagonal-left and diagonal-right directions in the present embodiment of the present invention. Referring to FIG. 3, DCT coefficients of a block X 310 can be also predicted from DCT coefficients of a block B 330 or DCT coefficients of a block D 350. The prediction direction from the DCT coefficients of the block B 330 is called the diagonal-right direction, and the prediction direction from the DCT coefficients of the block D 350 is called the diagonal-left direction. Here, when a block A 320, a block B 330, a block C 340, and a block D 350 that are adjacent to the block X 310 exist outside the boundary of a video or a slide, or is not an intra block, they are not used as an adjacent block.

First, a block that is to be used for predicting a DC coefficient of the block X 310 is decided. In the present embodiment, one of DC coefficients of the block A 320, the block B 330, the block C 340, and the block D 350 that is most similar to a DC coefficient of the block X 310 is searched. Then, AC coefficients of the block X 310 are predicted using AC coefficients of the searched adjacent block. Here, the predicted AC coefficients in the farthest left column and the top row in the block X 310 are obtained using AC coefficients at the farthest left column and the top row in the adjacent block.

Information regarding which adjacent block was used for the prediction is also encoded. This information is referred to as prediction mode information and it can be classified according to the prediction directions. For example, there are four types of prediction modes, i.e., a horizontal mode, a vertical mode, a diagonal-left mode, and a diagonal-right mode, and these can be indicated using 2 bits. If the prediction mode information is ac_pre_mode, for example, a "0×0" value can be decided to be the horizontal mode, a "0×1" value can be decided to be the vertical mode, a "0 X 2" value can be decided to be the diagonal-right mode, and a "0 ×3" value can be decided to be the diagonal-left mode.

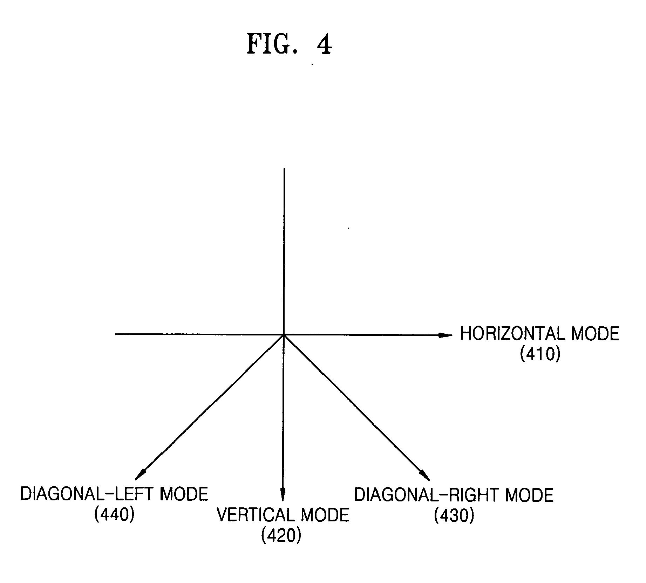

FIG. 4 is a view illustrating a direction for predicting a frequency transform coefficient in an embodiment of the present invention. Referring to FIG. 4, it can be seen that the prediction directions include a diagonal-right direction 430 and a diagonal-left direction 440 in addition to the conventional horizontal direction 410 and the vertical direction 420.

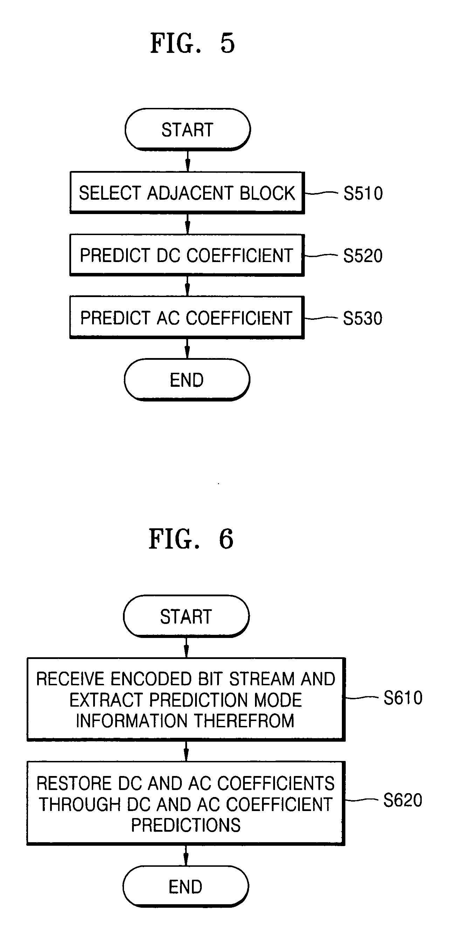

FIG. 5 is a flow chart illustrating a method of predicting a frequency transform coefficient in an encoding process according to an embodiment of the present invention.

First, a DC coefficient of a block is predicted using DC coefficients of adjacent blocks. To do so, a difference between the DC coefficients of the adjacent blocks in the horizontal, vertical, diagonal-left, and diagonal-right directions and the DC coefficient of the block are calculated, as described with reference to FIG. 3, and an adjacent block with the smallest difference value is selected (S510). The predicted DC coefficient of the block is obtained using the DC coefficient of the selected adjacent block (S520), and then AC coefficients of the block are predicted (S530). As described with reference to FIG. 3, the AC coefficients at the farthest left column and the top row of the selected adjacent block are used to obtain the predicted AC coefficients at the farthest left column and the top row of the block.

The prediction mode, which decides the prediction direction of a frequency transform coefficient, is determined using the DC coefficients as well as the AC coefficients. In other words, in operations S510, the DC coefficients and AC coefficients of the adjacent blocks in the horizontal, vertical, diagonal-right, and diagonal-left directions and the DC coefficients and the AC coefficients of the block are subtracted, and one of the adjacent blocks with the smallest difference value can be selected. The AC coefficients are in the farthest left column and top row within the block.

FIG. 6 is a flow chart illustrating a method of predicting a frequency transform coefficient in a decoding process according to an embodiment of the present invention. A video decoder receives an encoded bit stream, and prediction mode information included in the bit stream is extracted (S610). As in the above described example, if the prediction mode information is "ac_pred_mode," this information is extracted and if a "0×0" value is extracted, the prediction mode is determined to be the horizontal mode, if a "0×1" value is extracted, the prediction mode is determined to be the vertical mode, if a "0 ×2" value is extracted, the prediction mode is determined to be the diagonal-right mode, and if a "0×3" value is extracted, the prediction mode is determined to be the diagonal-left mode. Accordingly, the DC coefficients and the AC coefficients are restored (S620).

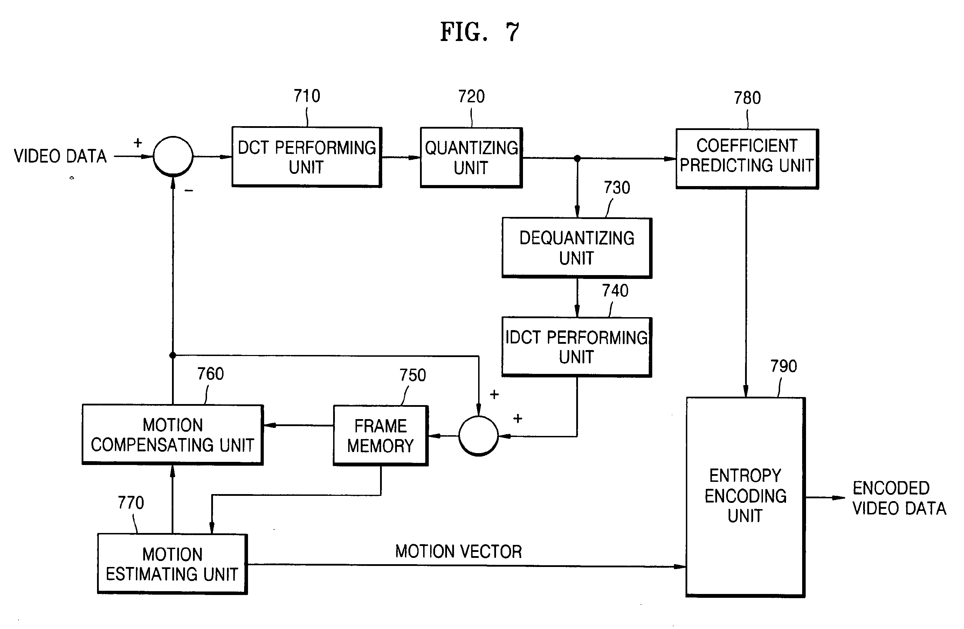

FIG. 7 is a block diagram of a video encoder according to an embodiment of the present invention.

Image data input to the video encoder is composed of a luminance component (Y component) and a chrominance component (Cb and Cr components). A 4×4 DCT or an 8×8 DCT is performed on a difference between the input image data and data obtained by motion estimation and compensation at a DCT performing unit 710. The DCT coefficients are quantized at a quantizing unit 720. The quantization is for reducing the amount of data that is to be encoded by dividing a coefficient obtained by DCT transform with a certain value to obtain a coefficient with a smaller value. A coefficient predicting unit 780 predicts the quantized DCT coefficients using DCT coefficients of the adjacent blocks. The prediction method is as described with reference to FIGS. 3 through 5. The predicted DCT coefficient predicted at the coefficient prediction unit 780 and a value used for quantization are variable length coded (VLC) by an entropy encoding unit 790 and are output.

Meanwhile, the quantized DCT coefficient is dequantized at a dequantizing unit 730 and DCT inversed at an inverse DCT (IDCT) performing unit 740 for motion estimation and compensation. A motion estimating unit 770 finds a macroblock having the least error in pixel values from pixel values of a macroblock that is to be encoded using a motion estimating method including block matching from a frame that is temporally adjacent to a frame having the macroblock that is to be encoded. A motion vector is a value indicating a motion of the macroblock that is to be currently encoded from a predicted macroblock with the least error. An image referred to generate the predicted macroblock is called a reference frame. The reference frame is stored in a frame memory 750. A motion compensating unit 760 is used when inter-coding data, and it compensates a difference image obtained by motion estimation and motion vector to the original image.

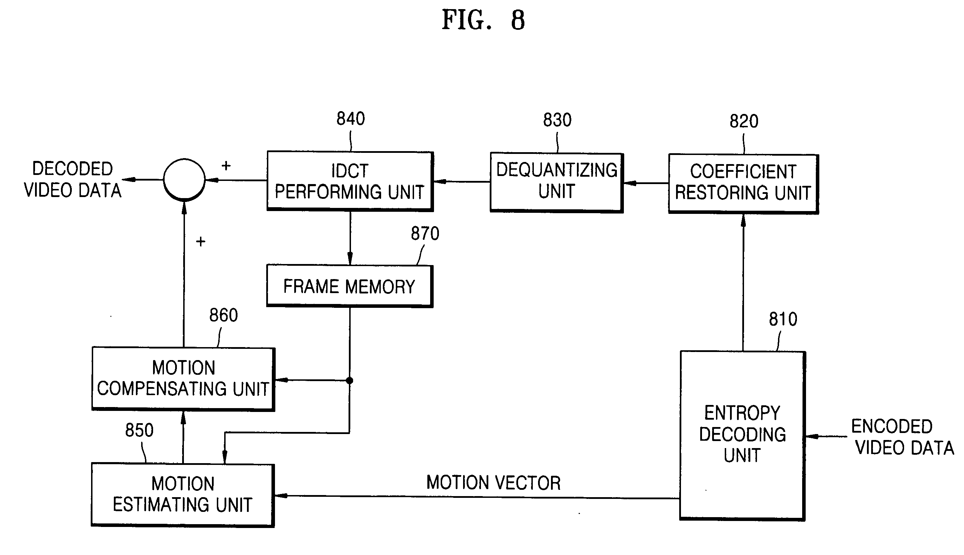

FIG. 8 is a block diagram of a video decoder according to an embodiment of the present invention.

An encoded bit stream is variable length decoded at an entropy decoding unit 810. DCT coefficients obtained by variable length decoding are transmitted from the entropy decoding unit 810 to a coefficient restoring unit 820. A motion vector is transmitted from the entropy decoding unit 810 to a motion estimating unit 850. A coefficient restoring unit 820 predicts DC and AC coefficients as described previously with reference to FIG. 3 according to an ac_pred_mode value, which is prediction mode information extracted by the entropy decoding unit 810. That is, the DC and AC coefficients of a current block are predicted using DC and AC coefficients of an adjacent block selected according to the ac_pred_mode value. The predicted coefficients are dequantized at a dequantizing unit 830 and an IDCT is performed on the resultant by an IDCT performing unit 840.

Meanwhile, the motion estimation unit 850 which received the information on the motion vector performs motion estimation with decoded block data stored in a frame memory 870. A motion compensating unit 860 is used when inter-coding, and it compensates a difference image obtained using motion estimation and a motion vector of the original image.

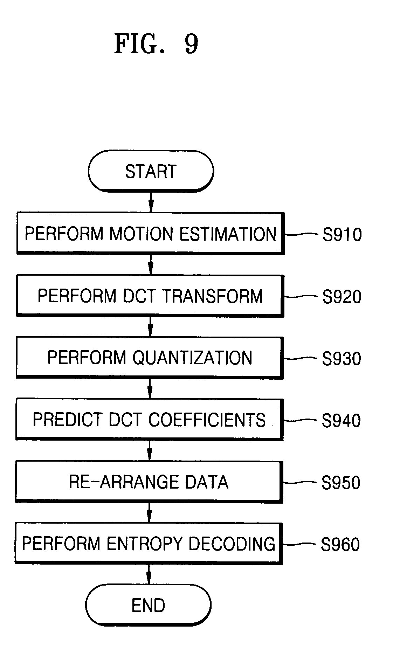

FIG. 9 is a flow chart illustrating a method of encoding video data using DCT coefficient prediction according to another embodiment of the present invention.

In the case of inter-coding, a difference image is obtained by performing motion estimation. In the case of intra-coding, motion estimation is omitted. The difference image obtained in such a way is transformed into a frequency domain using a DCT for example. That is, in the case of inter-coding, the difference image is transformed, and in the case of intra-coding, the original image is transformed. Then, quantizing is performed on the transformed coefficients.

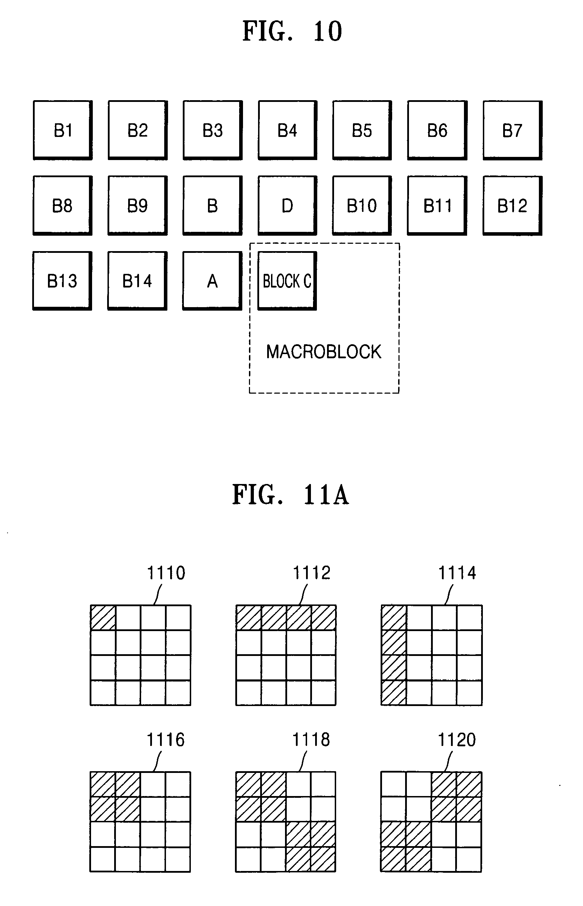

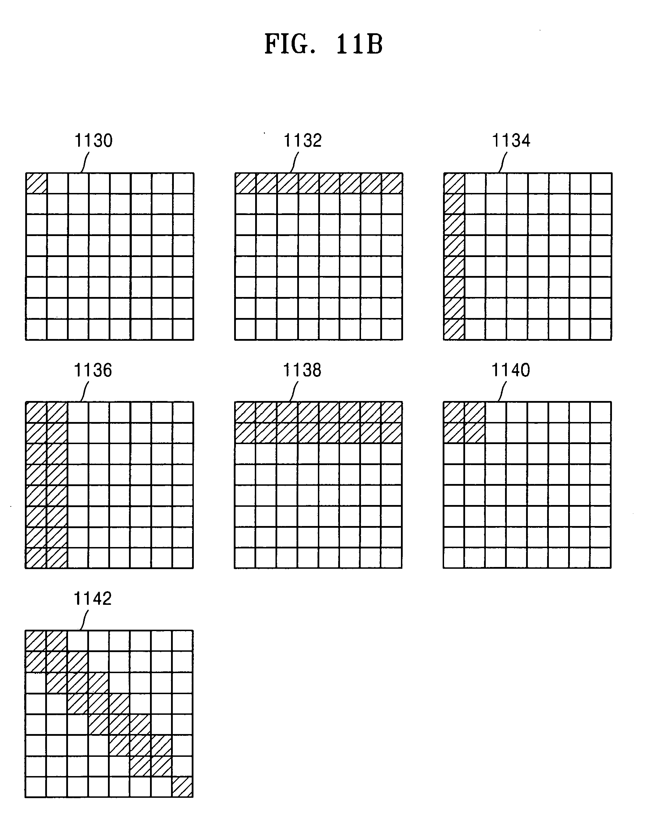

Therefore, referring to FIG. 9, the method of encoding the video data includes: performing motion estimation (S910), performing DCT transform (S920), performing quantizing (S930), performing DCT coefficient prediction (S940), performing data rearranging (S950), and performing entropy encoding (S960). Such process is the same as a general encoding method. However, when predicting DCT coefficients of a current block in the performing of the DCT coefficient prediction (S940), DCT coefficients are selected in various patterns in addition to DCT coefficients at a farthest left column and a top row of an adjacent block to predict the DCT coefficients. The adjacent blocks used in the prediction of the DCT coefficients and various patterns of the DCT coefficients used in the prediction will be described with reference to FIGS. 10, 11A, and 11B.

FIG. 10 is a view of adjacent blocks that are used in the DCT coefficient prediction.

Referring to FIG. 10, a block C that is to be encoded of which DCT coefficients are to be predicted and blocks A, B, and D can be used as adjacent blocks, or blocks A, B, and D, as well as B1 through B 14, which are further away from the block C, can be used as adjacent blocks.

FIG. 11A is a view illustrating a pattern of coefficients used in the prediction when using a 4×4 DCT transform.

Referring to FIG. 11 A, a DC coefficient at the top left corner 1110 can be used to predict a DC coefficient as in the conventional art, AC coefficients at a top row 1112 or at a farthest left column 1114 can be used to predict AC coefficients, 2×2 AC coefficients at the top left corner 1116 can be used to predict AC coefficients, 2 ×2 AC coefficients at the top left corner and 2 ×2 AC coefficients at the bottom right corner 1118 can be used to predict AC coefficients, or 2 ×2 AC coefficients at the top right corner and 2 X 2 AC coefficients at the bottom left corner 1120 can be used to predict AC coefficients. Besides these patterns, other coefficient patterns of various forms can be used according to the characteristics of an image that is to be encoded.

FIG. 11B is a view illustrating a pattern of coefficients used in the prediction when using an 8 × 8 DCT transform.

Referring to FIG. 11B, a DC coefficient at the top left corner 1130 can be used to predict a DC coefficient as in the conventional art, AC coefficients at a top row 1132 or at a farthest left column 1134 can be used to predict AC coefficients, AC coefficients at two farthest left columns 1136 or at two top rows 1138 can be used to predict AC coefficients, 2×2 AC coefficients at the top left corner 1140 can be used to predict AC coefficients, or 2X2 diagonal AC coefficients 1142 can be used to predict AC coefficients. Other coefficient patterns of various forms besides the ones describe above can be used according to the characteristics of an image that is to be encoded.

The performing of the DCT coefficient prediction (S940) will be described in more detail below. When there are coefficients that are DCT transformed and quantized, a best pattern is selected by performing prediction to the coefficient patterns as illustrated in FIG. 11A in the case of a 4×4 DCT transform or the coefficient patterns as illustrated in FIG. 11B in the case of an 8 × 8 DCT transform. Whether or not it is the optimum pattern is determined by calculating a cost and a pattern with the least cost is decided to be the optimum pattern as in the conventional coefficient prediction.

The calculation of the cost may include, for example, a rate-distortion cost (RD cost), a sum of absolute value (SAD), a sum of absolute transformed difference (SATD), a sum of squared difference (SSD), a mean of absolute difference (MAD), and a Lagrange function. The RD cost is described in more detail below as an example.

The rate R indicates a bit rate, and denotes a number of bits that are used to encode a macroblock. That is, the rate is a value obtained by adding the number of bits obtained by encoding a residual signal after inter- or intra-prediction is performed with the number of bits obtained by encoding motion vector information. The distortion D is a difference between an original macroblock when an encoded image is decoded and a decoded macroblock. Therefore, the distortion can be known when the original macroblock is restored after being decoded.

A block that is adjacent to a current block that is to be encoded is selected. As illustrated in FIG. 10, one block can be selected among the blocks A, B, D, B through B14 or one block can be selected among the blocks A, B, and D. A block can be selected according to the conventional DC coefficient prediction method, or a block with the smallest cost can be selected after calculating the cost of blocks adjacent to the current block in numerous directions, as described with reference to FIG. 3.

When a single adjacent block is selected, if it is assumed that a DCT coefficient of the selected adjacent block is coeffX.blockN and a coefficient of the current block is coeffX.blockC, a prediction encoding value predCoeff is calculated as: (coeffX.blockC - coeffX.blockN). Through such method, prediction encoding values predCoeff are calculated for all the patterns illustrated in FIG. 11A or FIG. 11B, and then a pattern with the smallest prediction encoding value is found. The predCoeff with the smallest prediction encoding value calculated as described above is entropy encoded and stored as a bit stream. Information on which pattern is selected to calculate the prediction encoding value is also entropy encoded and stored in the bit stream.

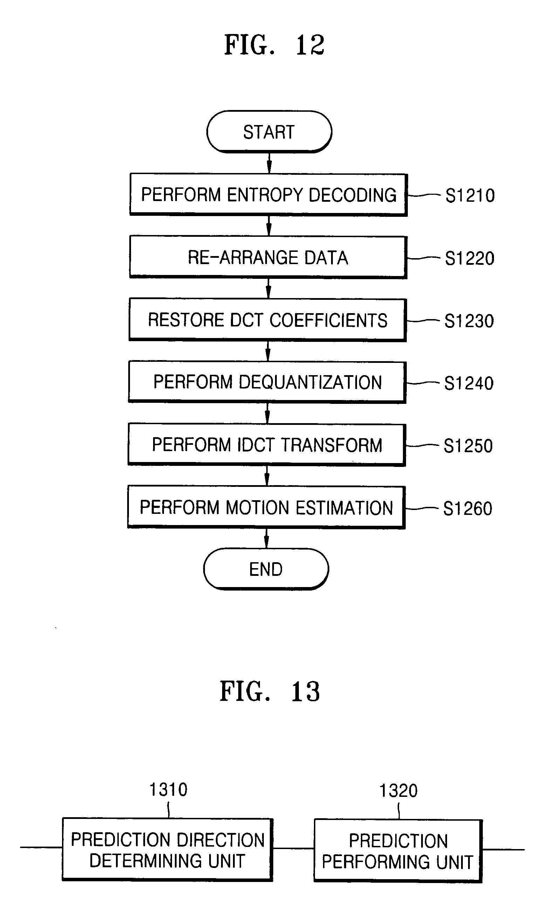

FIG. 12 is a flow chart illustrating a method of decoding video data using the DCT coefficient prediction according to an embodiment of the present invention. The received bit stream is entropy decoded (S1210). Through this, prediction mode information and DCT transform coefficients are obtained. The obtained coefficients are re-arranged to get coefficients in the form of 4×4 or 8×8 (S1220). The DCT coefficients are restored using the prediction mode information ac_pred_mode, which is obtained through entropy decoding (S1230). The prediction mode information is one of a pattern such as the patterns illustrated in FIG. 11A or 11B. Accordingly, DC and AC coefficients of the current block are predicted. That is, coeffX.blockC is calculated by (predCoeff + coeffX.blockN). The DC and AC coefficients obtained in such a way are dequantized (S1240), and a restored image is obtained by performing an IDCT transform on the DC and AC coefficients (S1250). The image obtained in the above-described method is the final image in intra-coding. However, the image is a difference image in inter-coding, and thus motion estimation needs to be further performed (S1260) to obtain a restored image.

FIG. 13 is a block diagram of the coefficient predicting unit 780 illustrated in FIG. 7.

The coefficient predicting unit 780 includes a prediction direction determining unit 1310 and a prediction performing unit 1320. The prediction direction determining unit 1310 calculates a difference between a DC coefficient of a current block that is to be encoded with each of a DC coefficient of adjacent blocks in horizontal, vertical, diagonal-left, and diagonal-right directions. The adjacent block with the smallest difference is determined as the prediction direction. The prediction direction can be in four directions as described with reference to FIG. 3, and an optimum adjacent block can be selected from a greater variety of adjacent blocks as illustrated in FIG. 10.

The prediction performing unit 1320 predicts DC and AC coefficients of the block that is to be encoded using the coefficients of the adjacent block selected by the prediction direction determining unit 1310. The prediction of the AC coefficients can be obtained using AC coefficients in both the furthest left column and the top row in the selected adjacent block. The prediction can be performed using coefficients of numerous patterns, as described with reference to FIGS. 11A and 11B.

According to preferred embodiments of the present invention as described above, compression efficiency can be improved by predicting DC and AC coefficients of a current block that is to be encoded from DC and AC coefficients of an adjacent block not only in a horizontal or vertical direction but also in a diagonal-left or diagonal-right direction, and only the difference between the current block and the selected adjacent block is encoded. In addition, by calculating prediction values of numerous patterns, video data can be effectively encoded reflecting characteristics of various patterns.

The above-mentioned method of coefficient prediction and encoding and decoding methods based on the method of coefficient prediction can be written as a computer program. Codes and code segments that configure the program can be easily construed by computer programmers skilled in the art to which the present invention pertains. In addition, the program is stored in computer readable media a computer can read, and is read by and operated by the computer, thereby executing the method. The computer readable media includes magnetic recording media, optical recording media, and carrier waves media.

While the present invention has been particularly shown and described with reference to exemplary embodiments thereof, it will be understood by those of ordinary skill in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of predicting frequency transform coefficients in a frequency transform domain, comprising:
calculating a cost between a DC coefficient of a current frequency transformed block that is to be predicted and DC coefficients of frequency transformed blocks adjacent in horizontal, vertical, and diagonal directions with respect to the current frequency transformed block; and
selecting an adjacent block with the smallest calculated cost, and predicting DC and AC coefficients of the current frequency transformed block using coefficients of the selected adjacent block.

2. The method of claim 1, wherein in the calculating of the cost, the cost is calculated using all the DC and AC coefficients of the adjacent blocks in the horizontal, vertical, and diagonal directions with respect to the current frequency transformed block.

3. The method of claim 1 or claim 2, wherein in the selecting of the adjacent block with the smallest calculated cost and predicting of the DC and AC coefficients of the current frequency transformed block, the coefficients of the current frequency transformed block are predicted using both AC coefficients at a furthest left column and AC coefficients at a top row of the selected adjacent block.

4. The method of any preceding claim, wherein the adjacent blocks include blocks right next to the current frequency transformed block, and further include blocks right next to the blocks that are right next to the current frequency transformed block.

5. The method of any preceding claim, wherein in the selecting of the adjacent block with the smallest calculated cost and predicting of the DC and AC coefficients of the current frequency transformed block, DC and AC coefficients of the current frequency transformed block are predicted by selecting transform coefficients in the selected adjacent block according to a plurality of patterns created reflecting the characteristics of a video image.

6. The method of claim 4, wherein the plurality of patterns comprise a pattern created by combining coefficients in a horizontal direction, a pattern created by combining coefficients in a vertical direction, a pattern created by combining coefficients in a rectangle, and a pattern created by combining coefficients in a diagonal direction.

7. An apparatus for predicting frequency transform coefficients in a frequency transform domain, comprising:
a prediction direction determining unit (1310) which calculates a cost between a DC coefficient of a current frequency transformed block that is to be predicted and DC coefficients of frequency transformed blocks adjacent in horizontal, vertical, and diagonal directions with respect to the current frequency transformed block, and selects an adjacent block with the smallest calculated cost; and
a prediction performing unit (1320) which predicts DC and AC coefficients of the current frequency transformed block using frequency transformed coefficients of the selected adjacent block.

8. The apparatus of claim 7, wherein the prediction direction determining unit (1310) calculates the cost using the DC coefficient of the current frequency transformed block and all the DC and AC coefficients of the adjacent blocks in the horizontal, vertical, and diagonal directions with respect to the current frequency transformed block.

9. The apparatus of claim 7 or claim 8, wherein the prediction performing unit (1320) predicts the coefficients of the current frequency transformed block using both coefficients at a furthest left column and coefficients at a top row of the selected adjacent block.

10. The apparatus of any one of claims 7-9, wherein the prediction performing unit (1320) predicts the DC and AC coefficients of the current frequency transformed block by selecting transform coefficients in the selected adjacent block according to a plurality of patterns created reflecting the characteristics of a video image.

11. A video encoder, comprising:
a coefficient predicting unit (780) that receives data in which a video frame that is to be encoded is transformed and quantized, calculates a cost between a DC coefficient of a current frequency transformed block that is to be predicted and DC coefficients of frequency transformed blocks adjacent in horizontal, vertical, and diagonal directions with respect to the current frequency transformed block, selects an adjacent block with the smallest calculated cost, and predicts DC and AC transform coefficients of the current frequency transformed block using coefficients of the selected adjacent block; and
an entropy encoding unit (790) that entropy encodes information regarding the selected adjacent block and the predicted transform coefficients.

12. The video encoder of claim 11, wherein the coefficient predicting unit (780) predicts the transform coefficients of the current frequency transformed block using both transform coefficients in a furthest left column and transform coefficients in a top row of the selected adjacent block.

13. The video encoder of claim 11 or claim 12, wherein the coefficient predicting unit (780) predicts the DC and AC coefficients of the current frequency transformed block by selecting the transform coefficients in the selected adjacent block according to a plurality of patterns created reflecting characteristics of a video image.

14. A method of encoding video data, comprising:
receiving video data in which a video frame that is to be encoded is transformed and quantized, calculating a cost between a DC coefficient of a current frequency transformed block that is to be predicted and DC coefficients of frequency transformed blocks adjacent in horizontal, vertical, and diagonal directions with respect to the current frequency transformed block, selecting an adjacent block with the smallest calculated cost, and predicting DC and AC coefficients of the current frequency transformed block using coefficients of the selected adjacent block; and
entropy encoding information regarding the selected adjacent block and the predicted transformed coefficients.

15. A video decoder, comprising:
an entropy decoding unit (810) that decodes an encoded bit stream, and extracts frequency transformed coefficients and prediction mode information, which contains information on an adjacent block used in predicting the frequency transformed coefficients; and
a coefficient restoring unit (820) that selects an adjacent block according to the extracted information on the adjacent block, and restores coefficients of a block which is to be restored using coefficients of the adjacent block.

16. The video decoder of claim 15, wherein the coefficient restoring unit (820) determines the coefficients of which adjacent block is being used for predicting DC and AC coefficients of a block to be restored based on the prediction mode information, and predicts DC and AC coefficients of the block that is currently being restored using the determined coefficients.

17. The video decoder of claim 15 or claim 16, wherein the coefficient restoring unit predicts coefficients of the block that is currently being decoded using coefficients in both a furthest left column and coefficients in a top row of the selected adjacent block.

18. The video decoder of any one of claims 15-17, wherein the coefficient restoring unit (820) selects transform coefficients in the selected adjacent block according to a plurality of patterns created by reflecting the characteristics of a video data.

19. A method of decoding video data, comprising:
entropy decoding an encoded bit stream, and extracting frequency transformed coefficients and prediction mode information, which contains information on an adjacent block used in predicting the frequency transformed coefficients; and
selecting an adjacent block according to the extracted information on the adjacent block, and restoring coefficients of a block which is to be restored using coefficients of the adjacent block.
